Europäisches Patentamt

European Patent Office

Office européen des brevets

(11) Veröffentlichungsnummer : **0 179 936**
**B1**

(12) EUROPÄISCHE PATENTSCHRIFT

(45) Veröffentlichungstag der Patentschrift :
03.01.90

(51) Int. Cl.⁵ : **G 06 F 13/36**

(21) Anmeldenummer : 84113060.2

(22) Anmeldetag : 31.10.84

(54) Verfahren und Einrichtung zur Steuerung einer Sammelleitung.

(43) Veröffentlichungstag der Anmeldung :
07.05.86 Patentblatt 86/19

(45) Bekanntmachung des Hinweises auf die Patenterteilung : 03.01.90 Patentblatt 90/01

(84) Benannte Vertragsstaaten :
DE FR GB

(56) Entgegenhaltungen :
EP—A— 0 086 601
WO—A—83 /013 15
FR—A— 2 231 050
SEVENTH EUROMICRO SYMPOSIUM ON MICROPRO-
CESSING AND MICROPROGRAMMING, 8.-10. September 1981, Paris, FR, IMPLEMENTING FUNCTIONS:
Microprocessors and firmware, Seiten 35-41, North-
Holland Publishing Company, Amsterdam, NL; H.
RIAD et al.: "A distributed virtual support information
exchange system"
IBM TECHNICAL DISCLOSURE BULLETIN, Band 22,
Nr. 4, September 1979, Seiten 1527-1528, New York,
US; A. BLUM: "Synchronous multiprocessor system
with common data local store"

(73) Patentinhaber : IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB

(72) Erfinder : Blum, Arnold, Dipl.-Ing.
Finkenweg 16
D-7261 Gechingen (DE)

(74) Vertreter : Barth, Carl Otto et al
IBM Deutschland GmbH Patentabteilung Schönaicher
Strasse 220
D-7030 Böblingen (DE)

**Beschreibung**

Die Erfindung betrifft ein Verfahren und eine Vorrichtung zur Steuerung einer Sammelleitung. Die Erfindung ist besonders für den Einsatz in Multimikroprozessorsystemen geeignet.

Eine Sammelleitung (Bus) ist eine elektrische Verbindung, an die mehrere elektronische Baugruppen, z. B. Prozessoren angeschlossen sind, um nach einem festgelegten Verfahren Signale untereinander auszutauschen. Derartige gemeinsame Verbindungsleitungen werden in modernen elektronischen Systemen häufig eingesetzt, und zwar sowohl innerhalb eines Gerätes als auch über kürzere oder längere Entfernungen zur Verbindung mehrerer Geräte. Zusammenfassende Darstellungen über die Einsatzmöglichkeiten von Sammelleitungen gibt die Artikelserie von B. Wiemann « Bussysteme », abgedruckt in RTP ab Heft 1 ; 1982. Sammelleitungen innerhalb eines Rechnersystems werden beispielsweise beschrieben von K.J. Thurber et al. « A systematic approach to the design of digital bussing structures », Proceedings of Fall Joint Computer Conference, 1972, S. 719 ff. und dem Kapitel « Buses » ab S. 269 in dem Buch « Computer Engineering » von C. Gordon Bell et al.

Ein zentraler Gesichtspunkt beim Entwurf eines Bussystems betrifft die Zuteilung dieser gemeinsamen Sammelleitung an jeweils eine der angeschlossenen Einheiten, so daß ein ungestörter und möglichst schneller Informationsaustausch stattfinden kann. Zeitverluste bei der Zuteilung der Sammelleitung und bei der eigentlichen Informationsübertragung müssen insbesondere bei einem Bus vermieden werden, der die Baugruppen innerhalb eines Prozessors miteinander verbindet, z.B. Prozessoren, Speicher und Eingabe/Ausgabesteuereinheiten. Diese Baugruppen werden immer häufiger als einzelne Chips realisiert, die eine sehr hohe interne Verarbeitungsgeschwindigkeit aufweisen und einen entsprechend schnellen Informationsaustausch erfordern. In vielen derartigen Systemen bildet die Sammelleitung schon jetzt die Grenze für eine weitere Erhöhung der Verarbeitungsgeschwindigkeit im gesamten System.

Bei genauer Untersuchung der Übertragungsvorgänge auf der Sammelleitung stellt man fest, daß die bisher eingesetzten Steuerungsverfahren für die Sammelleitung deren Übertragungkapazität nicht effektiv ausnutzen, da die Zuordnung der Sammelleitung zu einer angeschlossenen Einheit im allgemeinen sehr viel länger erfolgt als die eigentliche Datenübertragung. Außerdem wird in vielen Fällen die Sammelleitung an Einheiten zugeteilt, die zwar eine Busanforderung gestellt haben, aber aus anderen Gründen zeitweilig an einer Informationsübertragung gehindert sind.

Im IBM Technical Disclosure Bulletin Vol. 22, Nr. 4, September 1979, S. 1527 ist beschrieben, wie die Sammelleitung zeitlich besser ausgenutzt werden kann, wenn mehrere Speicherzugriffe zeitlich ineinander verschränkt werden. Dieses Verfahren kann jedoch nur angewandt werden, wenn entsprechende Speichertypen an die Sammelleitung angeschlossen sind. In der europäischen Patentschrift 86 601 ist ein Multiprozessorsystem angegeben, das besondere Schaltungen enthält, mit denen Zugriffe zur Sammelleitung unterdrückt werden, die von vornherein aussichtslos sind, da die angesprochene Einheit zu diesem Zeitpunkt durch andere Anforderungen belegt ist. Der Einbau derartiger Schaltungen erfordert jedoch Eingriffe in die Struktur der an die Sammelleitung angeschlossenen Einheiten und damit einen Aufwand, der nicht immer tragbar ist.

Die vorliegende Erfindung stellt sich daher die Aufgabe, ein Verfahren der eingangs genannten Art anzugeben, mit dem die Belegung der Sammelleitung verbessert und damit deren Übertragungskapazität vergrößert wird, und das für alle bekannten Bussysteme anwendbar ist ; außerdem sollen Einrichtungen zur Durchführung des Verfahrens angegeben werden, die bei hoher Verarbeitungsgeschwindigkeit einen möglichst geringen Aufwand erfordern.

Diese Aufgabe wird durch die in den Ansprüchen 1 und 5 gekennzeichnete Erfindung gelöst ; Ausgestaltungen der Erfindung sind in den abhängigen Ansprüchen gekennzeichnet.

Nach dem hier vorgeschlagenen Verfahren wird vor der Zuteilung der Sammelleitung untersucht, welche Operation die anfordernde Einheit ausführen will und welche weitere Einheit bei der beabsichtigten Belegung der Sammelleitung angesprochen werden soll. Zusammen mit Statusinformation über die angesprochene Einheit, die ebenfalls bei dem Zuteilungsverfahren berücksichtigt wird und dem momentanen Zustand der Sammelleitung kann dann entschieden werden, ob dem Zugriffswunsch schon stattgegeben werden soll oder nicht. Da nach dem vorgeschlagenen Verfahren die Zuteilung unter Kenntnis aller momentanen Umstände erfolgt, können auch Zugriffswünsche befriedigt werden, die bei den herkömmlichen groben Zuteilungsverfahren erst später hätten berücksichtigt werden können. Mit der Fähigkeit, unterschiedliche Busbefehle zu erkennen, besteht weiterhin die Möglichkeit, in den anfordernden Einheiten zusätzliche Befehle vorzusehen, mit denen eine dynamische Änderung der Priorität dieser Einheit für Buszugriffe ausgelöst werden kann.

Das hier vorgeschlagene Verfahren eignet sich sowohl für den Einsatz in einer zentralen Steuereinheit (Arbiter) für die Buszuteilung, als auch bei dezentraler Zuteilung ; es ist bei synchronem und asynchronem Busbetrieb verwendbar.

Ausführungsbeispiele der Erfindung werden nun anhand von Zeichnungen näher erläutert. Es zeigen :

Fig. 1 das Blockdiagramm eines sammelleitungsorientierten Rechnersystems mit einem zentralen Arbiter ;

Fig. 2A ein zeitliches Diagramm zur Darstellung der zeitlichen Belegung einer Sammelleitung nach dem Stand der Technik;

Fig. 2B ein zeitliches Diagramm der Belegung der Sammelleitung nach dem Stand der Technik;

Fig. 3 ein Impulsdiagramm für die Zuteilung der Sammelleitung nach dem hier vorgeschlagenen Verfahren;

Fig. 4A ein Impulsdiagramm für die Zuteilung der Sammelleitung in einem synchronen System nach dem Stand der Technik;

Fig. 4B ein Impulsdiagramm für die Zuteilung der Sammelleitung in einem synchronen System nach dem hier vorgeschlagenen Verfahren;

Fig. 5 ein Blockschaltbild eines Arbiters der hier vorgeschlagenen Art.

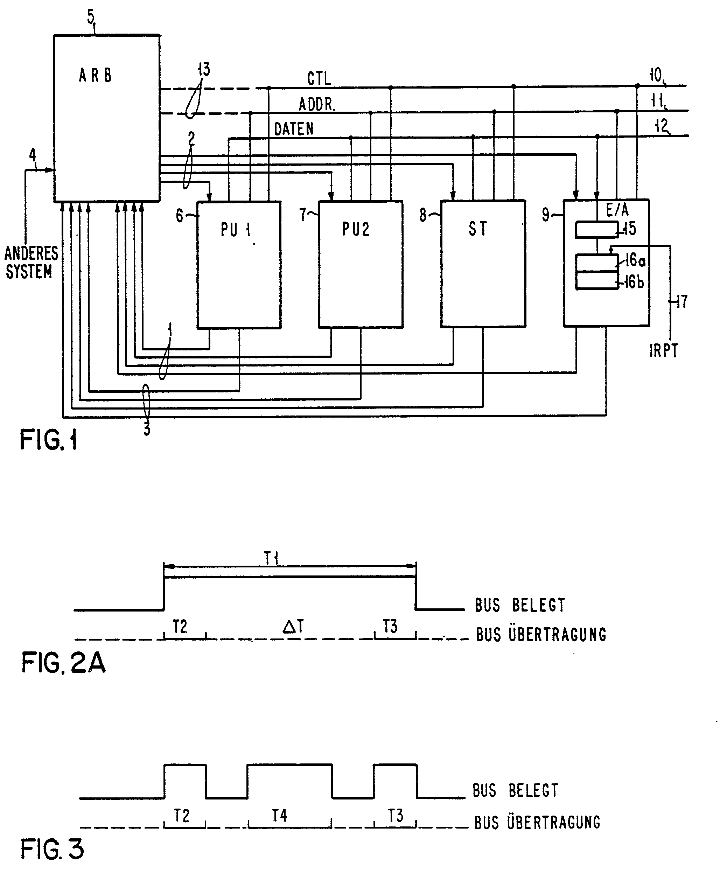

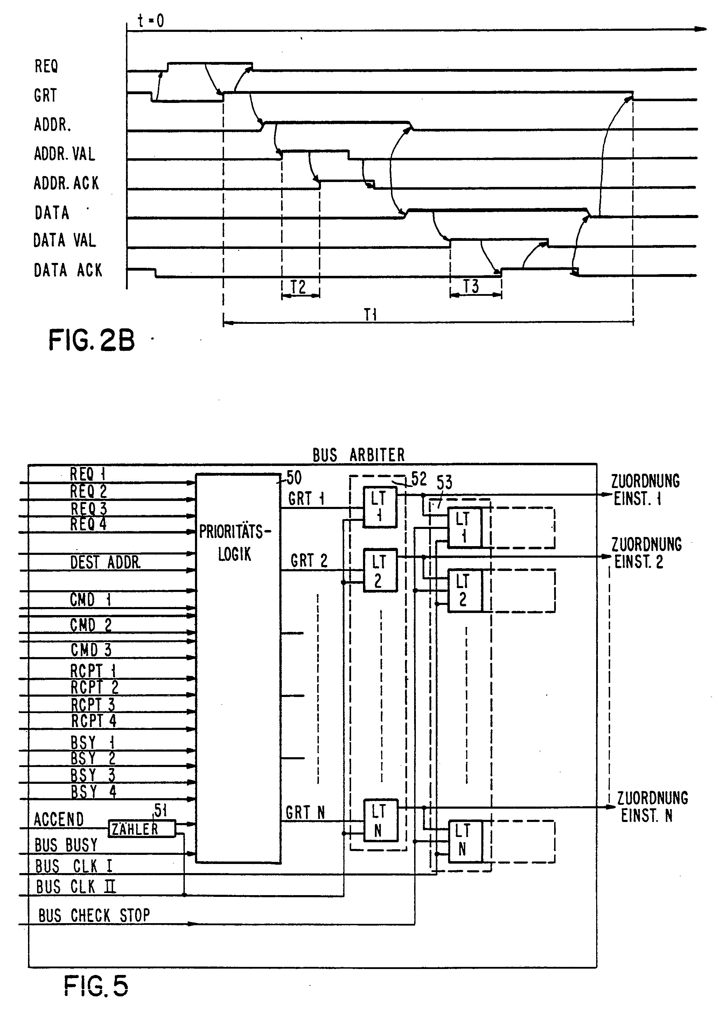

Fig. 1 zeigt in schematischer Weise ein Blockschaltbild eines sammelleitungsorientierten Prozessorsystems, bei dem eine oder mehrere Prozessoreinheiten PU 6, 7, ein gemeinsamer Speicher 8 und mehrere Eingabe-/Ausgabeeinheiten 9 an einen oder mehrere Busse angeschlossen sind. In Fig. 1 sind drei derartige Busse dargestellt, wobei Sammelleitung 10 für den Austausch von Steuerinformation dient, Sammelleitung 11 für den Austausch von Adressen der angeschlossenen Einheiten und Sammelleitung 12 für den Datenaustausch (und gegebenenfalls für den Speicheradressenaustausch). Alle an die Sammelleitungen angeschlossenen Einheiten 6 bis 9 geben über jeweils eine zugeordnete Leitung 3 ein Busanforderungssignal an einen zentralen Arbiter 5, der über Leitungen 2 das Buszuteilungssignal an eine der Einheiten zurückgibt. Wenn auf mehreren der Leitungen 3 gleichzeitig Busanforderungssignale stehen (ein sog. Buskonflikt), erfolgt die Buszuteilung durch den Arbiter nach einem der bekannten Prioritätsverfahren.

Neben den in Fig. 1 dargestellten busorientierten Rechnern mit zentralem Arbiter sind auch Systeme bekannt, in denen die Arbiterfunktion auf alle angeschlossenen Einheiten verteilt ist. Für derartige Systeme ist die Erfindung ebenfalls einsetzbar; im folgenden soll sie jedoch am Beispiel eines zentralen Arbiters weiter erläutert werden.

Die Erfindung schlägt vor, die Zuteilungslogik im Arbiter 5 so zu erweitern, daß zusätzliche in bisherigen Systemen nicht berücksichtigte Information ausgewertet und für die Buszuteilung nutzbar gemacht werden kann. Dazu sind in Fig. 1 weitere Leitungen 1 vorgesehen; einige dieser Leitungen verlaufen als separate Leitungen zwischen dem Arbiter 5 und den angeschlossenen Einheiten, andere als gemeinsame Leitungen mit mehreren Anschlüssen. Die über die Leitungen 1 ausgetauschten Informationen können in einer anderen Ausführungsform der Erfindung aber auch über eine oder mehrere der Sammelleitungen 10 bis 12 ausgetauscht werden, wenn der Arbiter 5 mit entsprechenden Anschlußleitungen 13 ausgestattet wird. Auch Mischformen zwischen diesen beiden Ausführungsbeispielen sind denkbar.

Die Erfindung schlägt nun vor, dem Arbiter 5 zur optimalen Buszuteilung neben dem bisher alleine üblichen Busanforderungssignal und der Adresse der anfordernden Einheit, die sich aus der jeweiligen Anforderungsleitung ergibt, die folgenden zusätzlichen Signale zuzuführen:

1. den Busbefehl für die Operation, die die anfordernde Einheit auf der Sammelleitung durchführen will,

2. die Adresse der Einheit, die von der anfordernden Einheit angesprochen werden soll,

3. das Signal « Einheit belegt » (Unit Busy) von jeder an die Sammelleitung angeschlossenen Einheit,

4. das Signal « Bus belegt » (Bus Busy) von jeder der an die Sammelleitung angeschlossenen Einheiten,

5. das Signal « Einheit empfangsbereit » (Unit Receptive) von jeder der an die Sammelleitung angeschlossenen Einheiten und

6. das Signal « erwartetes Zugriffsende » von jeder der an die Sammelleitung angeschlossenen Einheiten.

In der allgemeinsten Form sind für alle diese Signale (mit Ausnahme von Bus Busy) getrennte Leitungen zwischen der jeweiligen Einheit und dem Arbiter vorzusehen, um eine möglichst schnelle Buszuteilung zu erzielen.

Vor der genaueren Erläuterung dieser zusätzlichen Signale soll anhand des Zeitdiagramms in Fig. 2A die in herkömmlichen Systemen anzutreffende uneffektive Busausnutzung besprochen werden. Wenn eine anfordernde Einheit den Bus zugeteilt bekommen hat, belegt sie ihn während der gesamten Zeit T1, obwohl für die eigentlichen Übertragungsvorgänge auf dem Bus nur die Zeiten T2 (für die Adreßübertragung) und T3 (für die eigentliche Datenübertragung) erforderlich sind. Der Zeitraum ΔT zwischen diesen Übertragungsvorgängen wird von der angesprochenen Einheit benötigt, beispielsweise um die auf der Adreßsammelleitung anstehende Adresse aufzunehmen und zu überprüfen und die angeforderten Daten bereitzustellen. In ungünstigen Fällen kann es sogar vorkommen, daß die angesprochene Einheit zeitweise nicht verfügbar ist und so die gewünschte Datenübertragung gar nicht zustandekommen kann. Bei bekannten Systemen wird dieser Sachverhalt erst durch das Überschreiten einer gewissen Zeitgrenze festgestellt, beispielsweise wenn die angesprochene Einheit kein Rücksignal zurücksendet.

Fig. 2B zeigt ein ausführlicheres Zeitdiagramm des anhand von Fig. 2A erläuterten Beispiels in einem asynchronen Bussystem, das nach dem bekannten Hand-Shaking-Prinzip arbeitet. Die zeitliche Aufeinanderfolge der einzelnen Signale und Signalflanken ist in der üblichen Weise durch Pfeile dargestellt. In dem dargestellten Beispiel will einer der an die Sammelleitung angeschlossenen Prozessoren Daten aus dem Speicher lesen. Er gibt dazu über Leitung 3 (Fig. 1) ein Busanforderungssignal REQ, wenn eine frühere Buszuteilung GRT auf Leitung 2 zurückgesetzt wurde. Wenn der Bus zugeteilt wird, geht das Signal GRT in seinen hohen Pegel über und setzt dabei das Anforderungssignal REQ zurück. Die Speicheradresse ADDR, aus der Daten entnommen werden sollen, wird dann auf die Sammelleitung 12 gegeben und anschließend auf der Steuersammelleitung 10 mit ADDR VAL angezeigt, daß die Daten gültig sind. Nach dem üblichen Hand-Shake-Verfahren meldet sich dann der Speicher über Steuersammelleitung 10 mit dem Bestätigungssignal ADDR ACK für das erfolgreich empfangene Adreßsignal. Für den eigentlichen Adreßaustausch ist somit nur die Zeitspanne T2 erforderlich ; tatsächlich ist die Sammelleitung jedoch schon seit der positiven Signalflanke des Signals GRT belegt.

Wenn der angesprochene Speicher die auszulesenden Daten bereit hat, stellt er sie auf die Datensammelleitung 12 und gibt kurze Zeit später das Signal DATA VAL auf die Steuersammelleitung 10, um anzuzeigen, daß die Daten gültig sind. Wenn der Prozessor die Daten empfangen hat, gibt er das Bestätigungssignal DATA ACK auf Leitung 10, worauf das Signal DATA VAL zurückgesetzt wird und damit auch das Zuteilungssignal GRT für die Sammelleitung. Die eigentliche Belegung der Sammelleitung für den Datenaustausch ist nur während der Zeit T3 erforderlich. Tatsächlich wird die Sammelleitung aber während des gesamten Zeitraums T1 belegt.

Derartige unnütze Busbelegungen können nun verhindert werden, wenn alle oder einige der oben aufgeführten Signale dem Arbiter zur Verfügung gestellt werden. Lücken in der Busbelegung lassen sich auf diese Weise vermeiden.

Fig. 3 zeigt ein Beispiel für eine verschachtelte Busbelegung. Wenn der Arbiter nach dem Starten des in Fig. 2A dargestellten Übertragungsvorgangs aufgrund der für ihn jetzt erkennbaren Zeitverhältnisse bei jeder Busoperation feststellt, daß eine weitere Busanforderung vorliegt, die in der Zeit T4 abgewickelt werden kann, so teilt er dieser zweiten Einheit den Bus im vorher ungenützten Zeitintervall ΔT zu.

Die oben aufgeführten Signale werden bei der Buszuteilung in folgender Weise eingesetzt :

Signal « Einheit belegt (Unit Busy) »

Mit diesem Signal teilt jede Einheit dem Arbiter mit, daß sie zum gegenwärtigen Zeitpunkt an keiner Busübertragung teilnehmen kann, beispielsweise weil andere Tätigkeiten abgewickelt werden oder eine noch nicht vollständig abgeschlossene Kommunikation mit einer dritten Einheit ansteht. Busanforderungen anderer Einheiten zu dieser nichtbereiten Einheit werden daher nicht zugeteilt.

Um die Zeitdauer der Nichtverfügbarkeit einer Einheit möglichst gering zu halten, können in dieser auch konstruktive Maßnahmen getroffen werden ; beispielsweise können den Busanschlußregistern 15, die in den Einheiten von Fig. 1 üblicherweise enthalten sind, ein oder mehrere Pufferregister 16a, 16b nachgeschaltet werden, in die der Inhalt der Anschlußregister 15 sofort nach Beendigung einer Busübertragung übernommen wird, so daß die Anschlußregister für weitere Übertragungsvorgänge frei sind. Eine weitere Maßnahme besteht darin, die an die Sammelleitung angeschlossene Einheit freizugeben, selbst wenn eine ihrer Untereinheiten noch belegt ist. In diesem Fall muß dem Arbiter auch die noch belegte Untereinheit mitgeteilt werden, damit nur solche Busanforderungen zurückgestellt werden, die sich auf die belegte Untereinheit beziehen.

Signal « Bus belegt (Bus Busy) »

Dieses Signal wird von den an die Sammelleitung angeschlossenen Einheiten zu solchen Zeiten abgegeben, während denen echte Übertragungsvorgänge auf der Sammelleitung stattfinden (vgl. Fig. 2B). Eine Buszuteilung kann nur erfolgen, wenn weder das Signal « Einheit belegt » noch das Signal « Bus belegt » ansteht.

Adresse der angeforderten Einheit Jede anfordernde Einheit liefert dem Arbiter die Adresse der Einheit, mit der eine Kommunikation über den Bus gewünscht wird. Mit dieser Information ist es dem Arbiter dann möglich, das Signal « Einheit belegt » entsprechend auszuwerten. Außerdem kann der Arbiter aufgrund der Adresse die Eigenschaften der angesprochenen Einheit erkennen und diese zur optimalen Busausnutzung auswerten. In bekannten Systemen wird die Adresse der angeforderten Einheit nur an die anderen angeschlossenen Buseinheiten abgegeben, nicht aber an den Arbiter.

Signal « Busbefehl »

Mit diesem Signal wird dem Arbiter mitgeteilt, welche Operation die anfordernde Einheit auf dem Bus durchführen will. Beispiele für Busoperationen sind :

Die anfordernde Einheit will Daten aus der angesprochenen Einheit lesen.

Die anfordernde Einheit will Daten in die angesprochene Einheit einschreiben.

Die anfordernde Einheit gibt ein Auslösesignal für eine bestimmte Funktion in der angesprochenen Einheit.

Die anfordernde Einheit will einen Datenaustausch zwischen zwei weiteren an die Sammelleitung angeschlossenen Einheiten auslösen.

Die Information über die beabsichtigte Busoperation setzt den Arbiter allein oder zusammen mit den übrigen oben besprochenen Signalen in die Lage, bisher unbenützte Leerzeiten auf der Sammelleitung zu vermeiden, indem andere anstehende Busanforderungen mit passendem Zeitverhalten ausgeführt werden, die bei der herkömmlichen Buszuteilung erst zu späteren Zeitpunkten bedient würden. Derartige verschachtelte Busbelegungen lassen sich besonders gut in synchron betriebenen Bussystemen durchführen, da dort bei jedem Zugriff das genaue Zeitmuster bekannt ist, das von der jeweiligen Busoperation und den beteiligten Einheiten abhängt. Die Verkehrskapazität derartiger synchroner Busse wird dadurch höher, so daß sie mit noch besserem Wirkungsgrad insbesondere in Multimikroprozessorsystemen eingesetzt werden können, in denen sie schon bisher bevorzugt wurden, da bei ihnen keine Synchronisiervorgänge mit Rückmeldesignalen erforderlich sind, die zu einer Verlangsamung der Busgeschwindigkeit führen.

Das hier vorgeschlagene Verfahren zur Buszuteilung kann jedoch auch bei asynchron betriebenen Bussystemen eingesetzt werden, in denen die Synchronisierung durch Rückmeldesignale der angesprochenen Einheit erfolgt. Wenn auch bei solchen Systemen verschachtelte Buszugriffe möglich sein sollen, müssen die angeschlossenen Einheiten dem Arbiter mitteilen, zu welchen Zeitpunkten eine gerade anlaufende Operation abgeschlossen sein wird. Dazu dient das

Signal « erwartetes Zugriffsende »,

mit dem beispielsweise die Zeit angegeben wird, die ein Speicher mit periodischer Wiederauffrischung noch benötigt, um eine angeforderte Information an die Sammelleitung abzugeben. Dieses Signal kann auch so ausgestaltet werden, daß es nur eine Mindestzeit anzeigt, die noch zur Verfügung steht, bevor mit einer Reaktion der angesprochenen Einheit zu rechnen ist.

Signal « Einheit empfangsbereit »

Mit diesem Signal zeigt jede Einheit an, daß sie im Moment noch nicht für eine Busübertragung zur Verfügung steht, jedoch in einem (oder mehreren) Buszyklen angesprochen werden kann. Mit der so erhaltenen Gewißheit, daß die angesprochene Einheit nach einer bestimmten Zeit empfangsbereit ist, kann der Arbiter die Buszuteilung schon vorbereiten, um die Zeit der Busbelegung im Vergleich zum normalen Verfahren zu verkürzen. In der Praxis wird das Signal « Einheit empfangsbereit » erzeugt werden, wenn eine Einheit den Inhalt ihrer Empfangsregister in den eigenen Datenfluß oder die oben beschriebenen Pufferregister 16 übernimmt (beispielsweise in der Folge eines Unterbrechungssignals auf Leitung 17) und so die Empfangsregister für neue Daten bereit sind. Mit diesem Signal « Einheit empfangsbereit » lassen sich im Vergleich zum Stand der Technik große Zeitgewinne realisieren, da dort die Sammelleitung bis zur Entladung der Anschlußregister belegt wird.

Mit der Möglichkeit zur Auswertung von Busbefehlen wird der Arbiter in die Lage versetzt, vollkommen neue Funktionen durchzuführen. Als Beispiele derartiger Funktionen werden im folgenden u. a. die dynamische Änderung der Prioritäten bei der Buszuteilung besprochen sowie die Durchführung neuer Diagnosefunktionen.

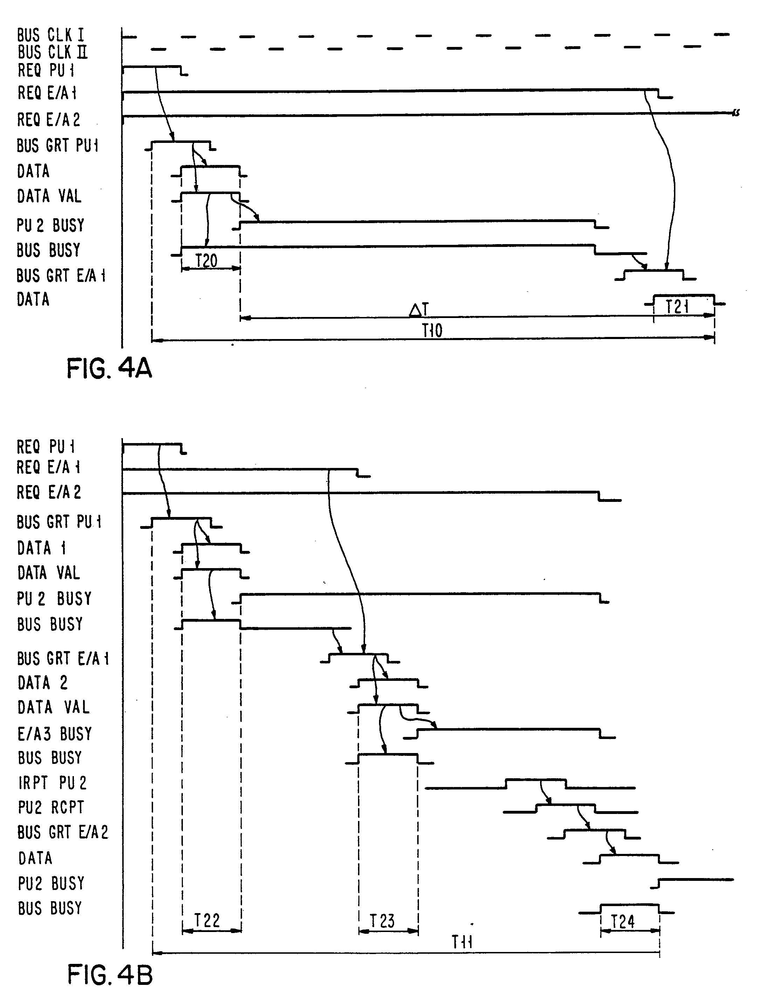

In den Fign. 4A und 4B sind Zeitdiagramme für Busübertragungsvorgänge in einem synchronen System dargestellt, und zwar in Fig. 4A nach den herkömmlichen Verfahren und in Fig. 4B unter Einsatz von zusätzlichen Signalen, wie sie von der Erfindung vorgeschlagen werden. In den obersten beiden Zeilen in Fig. 4A (die auch für Fig. 4B gelten) sind die Taktsignale dargestellt, die im synchronen Betrieb verwendet werden. Sie sind mit BUS CLK I und BUS CLK II bezeichnet.

In Fig. 4A ist der Fall dargestellt, daß Prozessor PU einen Kommunikationsvorgang mit Prozessor PU 2 durchführen will und gleichzeitig das Eingabe/Ausgabegerät E/A 1 einen Übertragungsvorgang mit Eingabe/Ausgabegerät E/A 3. Außerdem soll Eingabe/Ausgabegerät E/A 2 mit Prozessor PU 2 kommunizieren, nachdem dieser seinen Übertragungsvorgang mit Prozessor PU 1 abgeschlossen hat. Entsprechend dieser Aufgabe liegen in Fig. 4A drei Anforderungssignale REQ PU 1, REQ E/A 1 und REQ E/A 2 vor, die jeweils auf den Anforderungsleitungen 1 anstehen. Als erster erhält der Prozessor PU 1 die Sammelleitung zugeteilt (mit Signal BUS GRT), der daraufhin die Daten DATA bereitstellt und auf der Steuersammelleitung 10 die Gültigkeit der Daten mit dem Signal DATA VAL anzeigt. Prozessor PU 2 ist auch danach noch belegt, was mit dem Signal PU 2 BUSY angezeigt wird, so daß die Sammelleitung erst freigegeben werden kann, wenn dieses Belegtsignal abklingt ; dies ist durch den zeitlichen Verlauf des Belegtsignals für die Sammelleitung BUS BUSY angezeigt. Erst wenn die Sammelleitung wieder freigeworden ist, kann das Zuteilsignal für die Einheit E/A 1 abgegeben werden (BUS GRT E/A 1) und anschließend die Daten von der Einheit E/A 1 zur Einheit E/A 3 übertragen werden. Erst danach kann das Anforderungssignal REQ E/A 2 berücksichtigt werden ; dies ist in Fig. 4A nicht mehr dargestellt.

Zur Bedienung der beiden Anforderungen REQ PU 1 und REQ E/A 1 ist also insgesamt eine Zeit T10 erforderlich, obwohl die Sammelleitung selbst nur während den Zeitdauern T20 und T21 belegt ist. Der Grund für diese Verzögerung ist leicht einzusehen : Da der Arbiter nicht « weiß », daß der Zugriffswunsch der Einheit E/A 1 auf die Einheit E/A 3 gerichtet ist, muß er bei der Zuteilung der Sammelleitung auch den Fall berücksichtigen, daß die Einheit E/A 1 zum Prozessor PU 2 zugreifen will, der gerade Daten empfangen hat, die noch in seinen Eingangsregistern stehen. Der Prozessor PU 2 ist erst dann wieder aufnahmefähig, wenn diese Daten aus den Eingangsregistern abgerufen worden sind ; bis zu diesem Zeitpunkt gibt der Prozessor PU 2 noch das Belegtsignal ab.

Mit den hier vorgeschlagenen zusätzlichen Signalen kann der Arbiter den anhand von Fig. 4A erläuterten Fall beträchtlich schneller abwickeln. Entsprechend Fig. 4B liegen wieder die Anforderungssignale REQ PU 1, REQ E/A 1 und REQ E/A 2 an. Prozessor PU 1 erhält wie im vorherigen Beispiel aufgrund seiner Priorität zuerst die Sammelleitung zugeteilt (Signal BUS GRT PU 1), stellt dann die Daten zur Verfügung (DATA 1) und gibt das Gültigkeitssignal für die Daten ab (DATA VAL). Prozessor PU 2 gibt dann wie im vorherigen Fall das Belegtsignal PU 2 BUSY ab, bis seine Aufnahmeregister wieder zur Verfügung stehen. Abweichend von vorher wird jedoch jetzt das Belegtsignal für die Sammelleitung (BUS BUSY) zurückgesetzt, sobald das Gültigkeitssignal für die Daten vorliegt und somit sichergestellt ist, daß sich diese in den Eingangsregistern des Prozessors PU 2 befinden. Mit dem Verschwinden des Belegtsignals für die Sammelleitung kann diese der Einheit E/A 1 zugeteilt werden (Signal BUS GRT E/A 1), da nun der Arbiter weiß (aufgrund der ihm mitgeteilten Bestimmungsadresse), daß kein Zugriff zu dem noch belegten Prozessor PU 2 erfolgen soll. Die Daten für Einheit E/A 3 (DATA) werden dann auf die Sammelleitung gesetzt und das Gültigkeitssignal angesetzt (DATA VAL). Die Einheit E/A 3 gibt dann das Belegtsignal ab, das solange ansteht, bis die Eingangsregister der Einheit E/A 3 wieder aufnahmefähig sind. Das Belegtsignal für die Sammelleitung BUS BUSY verschwindet aber sofort, nachdem die Daten in die Eingangsregister von E/A 3 gelangt sind, so daß der Bus wieder für andere Übertragungen freigegeben ist.

Der noch ausstehende Übertragungswunsch von der Einheit E/A 2 zum Prozessor PU 2 wird im unteren Teil von Fig. 4B erläutert. In den Eingangsregistern des Prozessors PU 2 sind noch die Daten, die vom Prozessor PU 1 gerade eben übertragen wurden. Das Auslesen der Anschlußregister in PU 2 erfolgt auf ein Unterbrechungssignal (IRPT PU 2), das der Prozessor PU 2 entweder selbst erzeugt, wenn er die Daten in seinen internen Datenfluß übernehmen will, oder das er von außerhalb zugeführt erhält. Mit dem Auftreten dieses Unterbrechungssignals wird eine zeitlich bestimmte Folge von Abläufen eingeleitet, so daß der Prozessor PU 2 das Signal « Empfangsbereit » (PU 2 RCPT) abgeben kann, das dem Arbiter anzeigt, daß der Prozessor PU 2 nach einer bestimmten Zeit wieder aufnahmefähig wird. Die Sammelleitung wird dementsprechend schon jetzt der Einheit E/A 2 zugeteilt (BUS GRT E/A 2), so daß die Daten von E/A 2 gerade zu dem Zeitpunkt auf die Sammelleitung gegeben werden können, wenn der Prozessor PU 2 nicht mehr belegt ist (das Signal PU 2 BUSY verschwindet). Die Sammelleitung wird dann wie im vorherigen Fall wieder nur solange benötigt, bis die Daten von E/A 2 in den Eingangsregistern des Prozessors PU 2 sind; dieser gibt dann wieder das Belegtsignal ab (PU 2 BUSY). Die eigentliche Zeit der Busbelegung ist somit durch T22, T23, T24 gekennzeichnet.

Die Gesamtzeit zur Durchführung aller drei Datenübertragungsvorgänge ist in Fig. 4B mit T11 bezeichnet; diese ist ersichtlich kleiner als die Zeit T10 in Fig. 4A für nur zwei Übertragungsvorgänge.

In Multiprozessorsystemen spielt die Verwaltung von gemeinsam benutzbaren Betriebsmitteln, beispielsweise gemeinsamen Speicher, eine wesentliche Rolle. Wenn Prozessoren, beispielsweise PU 1 und PU 2 in Fig. beide berechtigt sind, Daten in den Speicher SP einzuschreiben, muß sichergestellt werden, daß zu einem bestimmten Zeitpunkt nur einer der Prozessoren mit dem Speicher kommuniziert. Zu diesem Zweck sind im Stand der Technik besondere Instruktionen bekannt geworden, mit denen die Anzeige, ob ein Betriebsmittel belegt ist oder nicht, abgefragt und im gleichen Zyklus gesetzt werden kann. Ein Beispiel dafür ist die « Test and Set » Instruktion in IBM/360/370 Systemen. Im oben erwähnten Beispiel zweier Prozessoren, die mit einem gemeinsamen Speicher über eine Sammelleitung verbunden sind, werden im Stand der Technik bestimmte Speicherpositionen für diese Anzeige verwendet. Wünscht ein Prozessor Zugriff zu dem Speicher, fordert er einen Buszugriff, um mit einer Test and Set Instruktion dieses Anzeigebit zu prüfen und gegebenenfalls zu setzen. War der Speicher schon dem konkurrierenden Prozessor zugeordnet, so wiederholt der anfordernde Prozessor diese Test and Set Instruktion so lange, bis er die Kontrolle über den Speicher erhält. Bei jeder dieser Abfrage wird also die Sammelleitung unnütz belegt, was insbesondere dann zu großen Zeitverlusten führt, wenn der anfordernde Prozessor mit hoher Priorität ausgestattet ist und somit sehr viel häufiger zu einer Buszuteilung kommt als der Prozessor, dem der Speicher gerade zugeordnet ist.

Mit der hier vorgeschlagenen Buszuteilung kann diese unbefriedigende Situation nun dadurch gelöst werden, daß der anfordernde Prozessor nach der ersten erfolglosen Test and Set Instruktion den Speicherzugriff mit einem Busbefehl durchführt, der sich von dem normalen Busbefehl (Lese im Speicher) unterscheidet. Wenn der Arbiter diesen zweiten Befehl empfängt, setzt er die Priorität der Buszuteilung für diesen Zugriffswunsch herab, ohne die Priorität für andere Busanforderungen dieses Prozessors zu beeinflussen. Auf diese Weise wird die Häufigkeit der Test and Set Instruktionen dieses einen Prozessors verringert und damit auch die unnützen Busbelegungen. Wenn das angeforderte Betriebsmittel, hier also der Speicher, später vom konkurrierenden Prozessor freigegeben ist, wird die ursprüngliche Priorität für Test and Set Instruktionen wieder hergestellt.

Eine entsprechende Möglichkeit zur dynamischen Änderung von Prioritäten beim Zugriff zu gemeinsamen Betriebsmitteln besteht auch, wenn mehrere sammelleitungsorientierte Prozessorsysteme nach Fig. 1 zusammengeschaltet werden. Zu diesem Zweck dienen Steuerleitungen 4, die dem Arbiter von anderen angeschlossenen Prozessoren zugeführt werden. Für gewisse Zeitabschnitte können damit den Zugriffen von fremden Prozessoren zu eigenen Betriebsmitteln (z. B. Speicher) die höchste Priorität eingeräumt werden.

Das hier vorgeschlagene Verfahren zur dynamischen Prioritätsänderung erfordert keine besonderen schaltungstechnischen Maßnahmen bei den an die Sammelleitung angeschlossenen Einheiten, wie es beispielsweise im Stand der Technik mit zusätzlichen Verriegelungs- und Anzeigegliedern der Fall ist, wie es anhand der europäischen Patentanmeldung 86 601 beschrieben wurde.

Eine weitere Anwendung eines Arbiters mit der Fähigkeit Busbefehle zu erkennen, liegt auf diagnostischem Gebiet. Tritt in einer angeschlossenen Einheit ein Fehler auf, so gibt diese ein Busanforderungssignal mit einem entsprechenden Busbefehl ab, der dann zu einer Buszuteilung mit hoher Priorität führt, wenn das Signal « Bus belegt » abwesend ist. Die einzelnen an die Sammelleitung angeschlossenen Einheiten müssen dann so ausgestattet sein, daß sie den diagnostischen Befehl auch dann erkennen, wenn sie eigentlich belegt sind und das Signal « Einheit belegt » abgeben ; die Verarbeitung in den angeschlossenen Einheiten muß bei Eintreffen dieses Befehls gestoppt werden, um den Systemzustand zur späteren Fehleranalyse einzufrieren.

Mit einem derartigen, über die normale Sammelleitung verlaufenden Diagnoseverfahren können die bei bekannten Systemen notwendigen zusätzlichen Sammelleitungen entfallen, mit denen die Systemkomponenten üblicherweise mit einem Dienstprozessor für Wartungszwecke verbunden sind.

Eine weitere Verbesserung der Diagnosefähigkeit wird erreicht, wenn ein Stapelspeicher vorgesehen wird, in den jeweils alle Information eingeschrieben werden kann, die zur Charakterisierung oder Wiederholung von zurückliegenden Busoperationen notwendig ist. Dazu gehört also jeweils der Busbefehl, die Adresse der anfordernden Einheit (die durch die Nummer der Anforderungsleitung bestimmt ist) und die Adresse der angeforderten Einheit und möglicherweise Zustandssignale der Sammelleitung. Wenn ein Fehler aufgetreten ist, wird das System eingefroren und mit Hilfe der im Stapelspeicher enthaltenen Information über die zurückliegenden Busvorgänge analysiert, oder aber diese können automatisch mit der dort enthaltenen Information wiederholt werden.

Fig. 5 zeigt ein schematisches Beispiel einer Schaltung für einen Arbiter (5 in Fig. 1). Einer Prioritätslogik 50 werden die im vorstehenden beschriebenen Signale zugeführt, nämlich :

die Sammelleitungsanforderungen (REQ über die Leitungen 1),
die Busbefehle CMD,
die Bestimmungsadresse DEST ADDR,
die Belegtbefehle BSY,
die Signale ( »Einheit empfangsbereit ») RCPT,
die Signale « erwartetes Zugriffsende » ; ACC END,
das Signal Sammelleitung belegt BUS BUSY.

Das Signal erwartetes Zugriffsende wird dabei an Zähler 51 zugeführt, der mit der Taktsteuerung BUS CLK II verbunden ist und erst ein Signal abgibt, wenn der Zählerstand auf Null gesunken ist. Die Prioritätslogik 50 gibt die Zuteilungssignale GRT für die einzelnen Einheiten ab, die in Verriegelungsschaltungen 52 jeweils für einen Taktzyklus gespeichert werden ; die Ausgänge der Verriegelungsschaltungen 52 sind mit den Leitungen 2 verbunden, die das Zuteilungssignal an die einzelnen Einheiten übertragen. Der Ausgang der Verriegelungsschaltungen 52 ist außerdem mit weiteren Verriegelungsschaltungen 53 verbunden (oder einer Kette von hintereinandergeschalteten Verriegelungsschaltungen 53), die einen Teil des obenerwähnten Stapelspeichers bilden und im Fehlerfall durch das Sammelleitungs-Fehlersignal (BUS Check Stop) eingefroren werden können. Die gesamte in Fig. 5 dargestellte Schaltung kann als integrierte Schaltung dargestellt werden oder aber nur Teile davon.

**Patentansprüche**

1. Verfahren zur Steuerung einer Sammelleitung bzw. Bus (13) mit mehreren angeschlossenen elektronischen Einheiten, insbesondere innerhalb eines Rechnersystems, und eines Arbiters (5), die Bus-Anforderungssignale von den angeschlossenen Einheiten empfängt und Bus-Zuteilungssignale entsprechend einem vorbestimmten Prioritätsschema an die anfordernden Einheiten abgibt,
gekennzeichnet durch die folgenden Schritte :
die an den Bus angeschlossenen Einheiten erzeugen Statussignale, die an den Arbiter zur Verarbeitung übermittelt werden ;
jede anfordernde Einheit übermittelt dem Arbiter zusammen mit dem Bus-Anforderungssignal Busoperationssignale, in denen die Adresse der angeforderten Einheit und der Befehlscode der auf dem Bus beabsichtigten Operation enthalten sind ;
bei konkurrierenden Bus-Anforderungssignalen mehrerer Einheiten erzeugt der Arbiter die Bus-Zuteilungssignale unter Berücksichtigung der Status-Signale der angeforderten Einheit und der beabsichtigten Bus- Operationen.

2. Verfahren nach Anspruch 1, dadurch gekennzeichnet, daß der Arbiter eines oder mehrere der folgenden Statussignale der an den Bus angeschlossenen Einheiten verarbeitet :
Einheit belegt,
Einheit empfangsbereit,
Sammelleitung mit Übertragungsvorgang belegt,
erwartetes Zugriffsende der Einheit.

3. Verfahren nach Anspruch 1 oder 2, dadurch gekennzeichnet, daß das Bus-Zuteilungssignal einer anfordernden Einheit mit niederer Priorität zugeteilt wird, wenn Bus-Anforderungen höherer Priorität aufgrund der übertragenen Statusinformation nicht durchgeführt werden können.

4. Verfahren nach einem der Ansprüche 1 bis 3, dadurch gekennzeichnet, daß für zwei oder mehrere kollidierende Bus-Anforderungen Bus-Operationen mit zeitlich verschränkter Busbelegung durchgeführt werden.

5. Arbiterschaltung (5) zur Steuerung einer Sammelleitung bzw. Bus (13) mit mehreren angeschlossenen elektronischen Einheiten (6-9), insbesondere innerhalb eines Rechnersystems, die Bus-Anforderungssignale von den angeschlossenen Einheiten empfängt und Bus-Zuteilungssignale entsprechend einem vorbestimmten Prioritätsschema an die anfordernden Einheiten abgibt,
gekennzeichnet durch die folgenden Merkmale :
Empfangsvorrichtungen für Statussignale (RCPT, BSY, ACCEND) der an den Bus angeschlossenen Einheiten ;
Empfangsvorrichtungen für Bus-Operationssignale, in denen die Adresse der angeforderten Einheit (DEST ADDR) und der Befehlscode (CMD) der durchzuführenden Bus-Operation enthalten sind ;
Verarbeitungsschaltungen (50) zur Erzeugung eines Bus-Zuteilungssignals unter logischer Verknüpfung · der Statussignale, der Adresse der angeforderten Einheit und des Befehlscodes der durchzuführenden Bus-Operation.

6. Arbiterschaltung nach Anspruch 5, dadurch gekennzeichnet, daß die Empfangsvorrichtungen für eines oder mehrere der folgenden Statussignale vorgesehen sind :

Einheit belegt,

Einheit empfangsbereit,

Sammelleitung mit Übertragungsvorgang belegt,

erwartetes Zugriffsende der Einheit.

7. Arbiterschaltung nach Anspruch 5 oder 6, dadurch gekennzeichnet, daß ausgewählten Statussignale (ACCEND) Zähler (51) zugeführt werden, die beim Erreichen eines vorbestimmten Zählerstandes ein Signal an die Verarbeitungsschaltungen (50) abgeben.

8. Arbiterschaltung nach einem der Ansprüche 5-7, dadurch gekennzeichnet, daß die Statussignale und die Bus-Operationssignale dem Arbiter über getrennte Leitungen zugeführt werden.

9. Arbiterschaltung nach einem der Ansprüche 5-8, dadurch gekennzeichnet, daß die Statussignale und die Bus-Operationssignale alle oder zum Teil über gemeinsame Sammelleitungen dem Arbiter zugeführt werden.

10. Arbiterschaltung nach einem der Ansprüche 5-9, dadurch gekennzeichnet, daß Stapelregister (53) vorgesehen sind, in die für jeden Buszugriff die Bus-Operationssignale und die Statusinformation eingetragen wird, die zu einer Wiederholung des Buszugriffs erforderlich ist.

## Claims

1. Method of controlling a bus (13) with several connected electronic units, in particular within a computer system, and an arbiter (5) receiving bus request signals from the connected units and emitting bus grant or allocate signals to the requesting units according to a predetermined priority pattern,

characterized by the following steps :

the units connected to the bus generate status signals which are transmitted to the arbiter for processing ;

each requesting unit transmits to the arbiter along with the bus request signal bus operation signals containing the address of the requested unit and the instruction code of the operation intended on the bus ;

in response to competing bus request signals from several units, the arbiter generates the bus grant signals, taking account of the status signals of the requested unit and the intended bus operations.

2. Method according to claim 1, characterized in that the arbiter processes one or several of the following status signals from the units connected to the bus :

unit busy,

unit receptive,

bus busy transmitting,

expected access end of unit.

3. Method according to claim 1 or 2, characterized in that the bus grant signal of a requesting unit is granted with a lower priority when bus requests of a higher priority cannot be executed because of the status information transmitted.

4. Method according to any one of the claims 1 to 3, characterized in that in response to two or several colliding bus requests, bus operations are performed busying the bus in a time interleaved fashion.

5. Arbiter circuit (5) for controlling a bus with several connected electronic units (6-9), in particular within a computer system, said circuit receiving bus request signals from the connected units and emitting grant signals to the requesting units according to a predetermined priority pattern, characterized by the following features :

receiver means for status signals (RCPT, BSY, ACCEND) of the units connected to the bus ;

receiver means for bus operation signals containing the address of the requested unit (DEST ADDR) and the instruction code (CMD) of the bus operation to be performed ;

processing circuits (50) for generating a bus grant signal, logically combining the status signals, the address of the requested unit and the instruction code of the bus operation to be performed.

6. Arbiter circuit according to claim 5, characterized in that the receiver means is provided for one or several of the following status signals :

unit busy,

unit receptive,

bus busy transmitting,

expected access end of unit.

7. Arbiter circuit according to claim 5 or 6, characterized in that the selected status signals (ACCEND) are fed to counters (51) which upon reaching a predetermined count emit a signal to the processing circuits (50).

8. Arbiter circuit according to any one of the claims 5 characterized in that the status signals and the bus operation signals are fed to the arbiter on separate lines.

9. Arbiter circuit according to any one of the claims 5 to 8, characterized in that all or part of the status signals and the bus operation signals are fed to the arbiter on common buses.

10. Arbiter circuit according to any one of the claims 5 to 9, characterized in · that push-down registers (53) are provided into which for each bus access the bus operation signals and the status information necessary for a bus access retry are entered.

## Revendications

1. Procédé de commande d'un conducteur omnibus ou bus (13) avec plusieurs unités électroniques raccordées, en particulier à l'intérieur d'un système de calculateur, et d'un arbitre (5), qui reçoit des signaux de demande de bus des unités raccordées et délivre aux unités requérantes des signaux d'attribution de bus selon un schéma de priorités prédéterminé, caractérisé par les étapes suivantes : les unités raccordées au bus engendrent des signaux d'état qui sont transmis à l'arbitre aux fins de traitement ;

chaque unité requérante transmet à l'arbitre, en même temps que le signal de demande de bus, des signaux d'opération de bus dans lesquels sont contenus l'adresse de l'unité demandée et le code d'instructions de l'opération voulue sur le bus ;

en cas de signaux de demande de bus concurrents de plusieurs unités, l'arbitre engendre les signaux d'attribution de bus en tenant compte des signaux d'état de l'unité demandée et des opérations voulues sur le bus.

2. Procédé selon la revendication 1, caractérisé en ce que l'arbitre traite un ou plusieurs des signaux d'état suivants des unités raccordées au bus :

unité occupée ;

unité prête à la réception ;

conducteur omnibus occupé par une transmission ;

attente de fin d'accès de l'unité.

3. Procédé selon la revendication 1 ou 2, caractérisé en ce que le signal d'attribution de bus est attribué à une unité requérante à faible priorité lorsque des demandes de bus de priorité supérieure ne peuvent être satisfaites en raison de l'information d'état transmise.

4. Procédé selon l'une des revendications 1 à 3, caractérisé en ce que, pour deux demandes de bus ou plus en collision, des opérations à occupation du bus emboîtées dans le temps sont effectuées sur le bus.

5. Circuit arbitre (5) pour la commande d'un conducteur omnibus ou bus avec plusieurs unités électroniques (6-9) raccordées, en particulier à l'intérieur d'un système de calcul, qui reçoit des signaux de demande de bus des unités raccordées et délivre des signaux d'attribution de bus selon un schéma de priorités prédéterminé aux unités requérantes, caractérisé par les caractéristiques suivantes :

des dispositifs de réception pour des signaux d'état (RCPT, BSY, ACCEND) des unités raccordées au bus ;

des dispositifs de réception pour des signaux d'opérations de bus, dans lesquels sont contenus l'adresse de l'unité demandée (DEST, ADDR) et le code d'instructions (CMD) de l'opération de bus à effectuer ;

des circuits de traitement (50) pour engendrer un signal d'attribution de bus avec combinaison logique des signaux d'état, de l'adresse de l'unité demandée et du code d'instructions de l'opération de bus à effectuer.

6. Circuit arbitre selon la revendication 5, caractérisé en ce que les dispositifs de réception pour un ou plusieurs des signaux d'état suivants sont prévus :

unité occupée ;

unité prête à la réception ;

conducteur omnibus occupé par une transmission ;

attente de fin d'accès de l'unité.

7. Circuit arbitre selon la revendication 5 ou 6, caractérisé en ce que des signaux d'état sélectionnés (ACCEND) sont transmis à des compteurs (51) qui, lorsqu'une position de comptage prédéterminée est atteinte, délivrent un signal aux circuits de traitement (50).

8. Circuit arbitre selon l'une des revendications 5 à 7, caractérisé en ce que les signaux d'état et les signaux d'opération de bus sont transmis à l'arbitre par des conducteurs séparés.

9. Circuit arbitre selon l'une des revendications 5 à 8, caractérisé en ce que les signaux d'état et les signaux d'opération de bus sont transmis à l'arbitre en totalité ou en partie par des conducteurs omnibus communs.

10. Circuit arbitre selon l'une des revendications 5 à 9, caractérisé en ce que l'on prévoit des registres accumulateurs (53) dans lesquels sont enregistrés pour chaque accès au bus les signaux d'opérations de bus et l'information d'état qui est nécessaire pour une répétition de l'accès au bus.

FIG. 1

FIG. 2A

FIG. 3

1

FIG. 2B

BUS ARBITER

FIG. 5

FIG. 4A

FIG. 4B